# EUROPEAN PATENT SPECIFICATION

(11) **EP 0 908 084 B1**
(45) Date of publication and mention of the grant of the patent: **02.01.2003**
(21) Application number: 98203421.7
(22) Date of filing: 09.10.1998
(51) Int. Cl.: A01C 3/00

(54) **manure purifying device**
Vorrichtung um Mist zu reinigen
Appareil pour purifier du fumier

(30) Priority: 13.10.1997 NL 1007261
(43) Date of publication of application: 14.04.1999
(73) Proprietor: PISO, Bastiaan D. F., Curacao (AN)
(72) Inventor: PISO, Bastiaan D. F., Curacao (AN)
(74) Representative: Van Someren, Petronella F. H. M.

(56) References cited:
- EP-A- 0 286 616
- DE-C- 3 615 873
- DE-C- 3 835 468
- DE-U- 8 806 487

## Description

The present invention relates to a device for purifying manure, particularly originating from animals such as pigs, cows and so on.

Devices of the above stated type are known from the prior art ; see e.g. DE-C-3 835 468. The drawback hereof is that purifying of the manure is a lengthy process.

The present invention has for its object to provide a simple and inexpensive device for purifying manure which has a high efficiency. For this purpose a device is provided which comprises an insulated storage container for storing a quantity of manure, which storage container accommodates means for distributing oxygen-containing gas, has an inlet opening for supplying the quantity of manure, has a first outlet opening for discharging process gases to a combustion member which is placed outside the storage container and is connected to at least one heat panel arranged in the storage container, and has a second outlet opening for discharging the purified quantity of manure.

By mixing the manure with oxygen-containing gas and discharging the process gases to a combustion member, the unwanted substances in the manure are degraded and removed and the manure is purified. When the process gases are burned, energy is released which is used effectively to heat the heat panel or the heat panels.

The device relates to a local solution which performs the manure purification on the premises of the cattle farmer himself. This manure purifying device processes the manure to a biologically pure and reliably clean end product, thereby reducing manure transports and stench nuisance resulting from manure storage.

The storage container preferably has a rectangular form and a heat panel is placed in each of the corners of the storage container. This ensures that an equal temperature prevails everywhere in the storage container. In a preferred embodiment the heat panels are placed at an angle of 45° relative to the bottom surface of the storage container. Heat panels can hereby be used with a larger radiation surface.

A heat panel is preferably placed in the centre of and perpendicular to the bottom surface of the storage container, so that heat can be generated from the middle of the storage container to the manure situated therearound.

In order to allow the manure to circulate in the storage container, the heat panel is or the heat panels are placed at a distance from the side surfaces, the bottom surface and the top surface of the storage container.

In order to allow an even easier circulation of the manure in the storage container, an extruder is incorporated in the inlet opening thereof for grinding the manure.

The means for distributing oxygen-containing gas are preferably formed by conduits arranged on the bottom surface of the storage container. These oxygen-distributing conduits ensure a good distribution of the oxygen-containing gas in the manure.

For an efficient and constant dosing of the oxygen-containing gas in the manure, the conduits are connected to a compressor.

In order to obtain an optimal mixing of the manure and the oxygen-containing gas and to allow the process gases to escape from the manure, means for circulating the content of the storage container are provided.

In a preferred embodiment the circulation means are formed by a double-action pump. This is preferred to other means, such as for instance a screw, since it does not come into contact with the manure and the process gases and is not therefore subject to wear.

In a preferred embodiment the combustion member is formed by a geyser, which is inexpensive and simple.

The storage container includes a sensor for detecting the concentrations of the process gases. It is possible to derive therefrom when the content of the storage container is biologically pure and reliably clean, so that the storage container can be emptied.

The present invention will be further elucidated hereinbelow with reference to a preferred embodiment, which is shown in the annexed drawing.

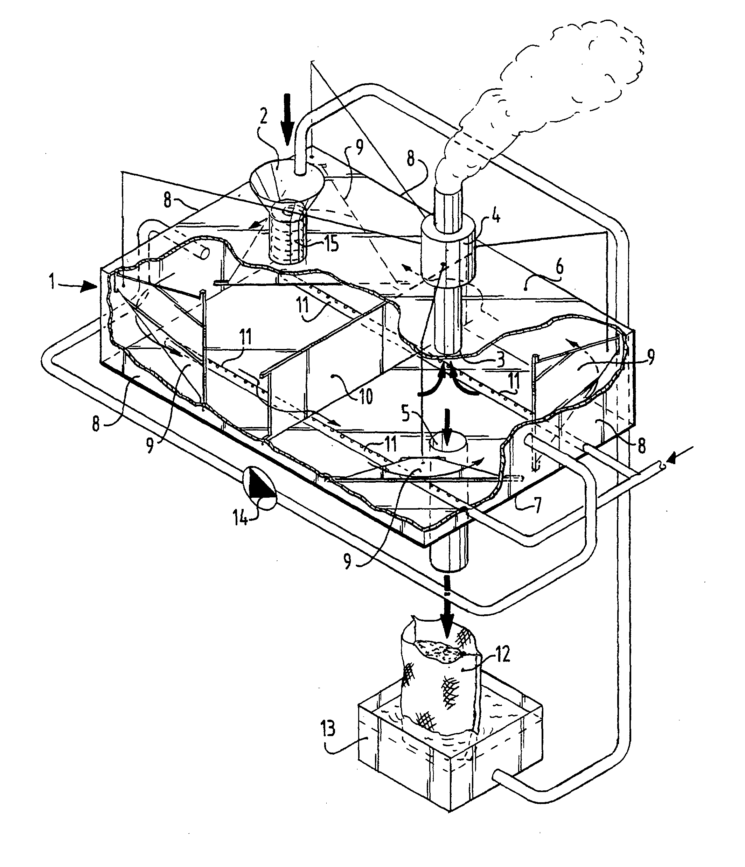

The drawing shows a device for purifying manure. The device comprises an insulated storage container 1 with an inlet opening 2 for supplying a quantity of manure, a first outlet opening 3 for discharging the process gases to a combustion member 4 and a second outlet opening 5 for discharging the purified quantity of manure. It makes no difference in principle where openings 2, 3 and 5 are arranged in the storage container. It is however useful to arrange the first outlet opening 3 for discharging process gases in the top surface 6 of storage container 1 since use can then be made of the fact that gas rises.

Storage container 1 has a rectangular form with a top surface 6, bottom surface 7 and four side surfaces 8. A heat panel 9 is placed in each of the corners of storage container 1. These heat panels 9 lie at an angle of 45° relative to the bottom surface 7 of storage container 1. In the corners the heat panels 9 are also placed a few centimetres, preferably 10 cm, clear of side surfaces 8, bottom surface 7 and top surface 6, so that the content of storage container 1 can circulate readily therein. A further heat panel 10 is placed in the centre of and perpendicular to the bottom surface of the storage container. This heat panel 10 is also placed at a distance from surfaces 6, 7, 8 of storage container 1 to allow circulation of the content of storage container 1.

The combustion member 4, preferably in the form of a geyser, is connected to the first outlet opening 3 to combust the released process gases. Heat panels 9 and 10 are connected to combustion member 4 to bring this to and keep it at the desired temperature.

Conduits 11 for distributing oxygen-containing gas are arranged on the bottom surface of the storage container. Conduits 11 are connected to a compressor (not shown) so that an efficient and constant dosing of the oxygen in the manure is realized.

An extruder 15 is further arranged in inlet opening 2 which is arranged in the top surface 6 of storage container 1. Extruder 15 grinds the manure to particles which are preferably smaller than 2 mm.

The second outlet opening 5 for discharging the purified manure is arranged in the bottom surface 7 of storage container 1. The purified manure is collected in a finely woven jute sack 12, which also functions as filter. The fluid released herein is collected in a vessel 13 and can be re-used to dilute the manure for purifying when the manure is too thick for circulating in storage container 1. A double-action pump is mounted on the side surfaces 8 of storage container 1 to circulate the (optionally diluted) manure.

The manure purifying device is placed on the premises of the cattle farmer for processing of the farm's own manure production. The device comprises a steel storage container which can be placed close to the stall or liquid manure pit. The storage container is filled by means of a pump from the liquid manure pit, or by a pump on the liquid manure tanker. The manure is carrier into the storage container via the extruder in the inlet opening. If the manure is too thick for circulation in the storage container, water is added. When the level of the content of the storage container rises above the suction point of the double-action pump, the pump is started and circulation of the manure begins. Filling continues until a pre-determined level in the storage container is reached. The heat panels are brought to temperature, preferably 28°, using the combustion member and kept at this temperature for a determined period of time. The oxygen-containing gas is introduced into the storage container by the distribution conduits. Determined unwanted substances occurring in the manure are already degraded in the storage container using oxygen and bacteria present in the manure. In addition, the oxygen serves as carrier to guide the process gases released from the degradation and other unwanted gases which have not been degraded to the geyser, where these gases are combusted. The gases, particularly in the case of incomplete combustion, can optionally be purified even further using for instance a filter, sawdust or sand in a compost pit. The sensor regularly measures the concentrations of the process gases. The temperature will optionally be increased further should this be found necessary from the measurement data. When the measurement data shows that the manure is biologically pure and reliably clean, the storage container is emptied. Arranged for this purpose on the second outlet opening are one or more jute sacks, in which the pure manure is collected. Because each jute sack also serves as filter, the fluid, mainly water, is separated from the solid substance and collected in the vessel. The fluid can be re-used to bring the manure to the right consistency during the next cycle or to be further spread on the land. After drying, the solid substance is offered in the jute sack to a central incinerator or used as filling manure.

Another possibility is to empty the storage container, when the content thereof is odour-free, into the settling pit which is made in the ground for the storage container. When the residue has settled sufficiently, the liquid can be removed via tankers to fertilize the land. The sediment must be removed from the pit at a time to be determined later in order to be dried and removed for incineration.

## Claims

1. Device for purifying manure having an insulated storage container (1) for storing a quantity of manure, which storage container accommodates means (11) for distributing oxygen-containing gas, an inlet opening (2) for supplying the quantity of manure, a first outlet opening (3) for discharging process gases to a combustion member (4) which is placed outside the storage container and is connected to at least one heat panel (9) arranged in the storage container, and a second outlet opening (5) for discharging the purified quantity of manure.

2. Device as claimed in claim 1, **characterized in that** the storage container has a rectangular form and a heat panel is placed in each of the corners of the storage container.

3. Device as claimed in claim 2, **characterized in that** the heat panels are placed at an angle of 45° relative to the bottom surface of the storage container.

4. Device as claimed in any of the foregoing claims, **characterized in that** a heat panel is placed in the centre of and perpendicular to the bottom surface of the storage container.

5. Device as claimed in any of the foregoing claims, **characterized in that** the heat panels are placed at a distance from the side surfaces, the bottom surface and the top surface of the storage container.

6. Device as claimed in any of the foregoing claims, **characterized in that** an extruder is incorporated in the inlet opening for grinding the manure.

7. Device as claimed in any of the foregoing claims, **characterized in that** the means for distributing oxygen-containing gas are formed by conduits arranged on the bottom surface of the storage container.

8. Device as claimed in claim 7, **characterized in that** the conduits are connected to a compressor.

9. Device as claimed in any of the foregoing claims, **characterized in that** means are provided for circulating the content of the storage container.

10. Device as claimed in claim 9, **characterized in that** the circulation means are formed by a double-action pump.

11. Device as claimed in any of the foregoing claims, **characterized in that** the combustion member is formed by a geyser.

12. Device as claimed in any of the foregoing claims, **characterized in that** the storage container includes a sensor for detecting the concentrations of the process gases.

## Patentansprüche

1. Vorrichtung zum Reinigen von Dung, mit einem isolierten Aufbewahrungsbehälter (1) zum Aufbewahren einer Dungmenge, wobei im Aufbewahrungsbehälter Mittel (11) zum Verbreiten von sauerstoffhaltigem Gas untergebracht sind, einer Einlassöffnung (2) zum Zuführen der Dungmenge, einer ersten Ablassöffnung (3) zum Ablassen von Prozessgas zu einem Verbrennungsteil (4), das außerhalb des Aufbewahrungsbehälters angeordnet ist und mit mindestens einem im Aufbewahrungsbehälter angeordneten Heizpaneel (9) verbunden ist, und einer zweiten Ablassöffnung (5) zum Ablassen der gereinigten Dungmenge.

2. Vorrichtung gemäß Anspruch 1, **dadurch gekennzeichnet, dass** der Aufbewahrungsbehälter eine rechteckige Form hat und dass in jeder Ecke des Aufbewahrungsbehälters ein Heizpaneel angeordnet ist.

3. Vorrichtung gemäß Anspruch 2, **dadurch gekennzeichnet, dass** die Heizpaneele in einem Winkel von 45° relativ zur unteren Fläche des Aufbewahrungsbehälters angeordnet sind.

4. Vorrichtung gemäß einem der vorangehenden Ansprüche, **dadurch gekennzeichnet, dass** ein Heizpaneel im Zentrum der und senkrecht zur unteren Fläche des Aufbewahrungsbehälters angeordnet ist.

5. Vorrichtung gemäß einem der vorangehenden Ansprüche, **dadurch gekennzeichnet, dass** die Heizpaneele im Abstand von den Seitenflächen, der unteren Fläche und der oberen Fläche des Aufbewahrungsbehälters angeordnet sind.

6. Vorrichtung gemäß einem der vorangehenden Ansprüche, **dadurch gekennzeichnet, dass** ein Extruder in die Einlassöffnung zum Zerkleinern des Dungs eingebaut ist.

7. Vorrichtung gemäß einem der vorangehenden Ansprüche, **dadurch gekennzeichnet, dass** die Mittel zum Verbreiten von sauerstoffhaltigem Gas mittels Kanäle ausgebildet sind, die auf der unteren Fläche des Aufbewahrungsbehälters angeordnet sind.

8. Vorrichtung gemäß Anspruch 7, **dadurch gekennzeichnet, dass** die Kanäle mit einem Kompressor verbunden sind.

9. Vorrichtung gemäß einem der vorangehenden Ansprüche, **dadurch gekennzeichnet, dass** Mittel zum Umwälzen des Inhalts des Aufbewahrungsbehälters vorgesehen sind.

10. Vorrichtung gemäß Anspruch 9, **dadurch gekennzeichnet, dass** die Umwälzmittel mittels einer doppelwirkenden Pumpe ausgebildet sind.

11. Vorrichtung gemäß einem der vorhergehenden Ansprüche, **dadurch gekennzeichnet, dass** das Verbrennungsteil mittels eines Warmwasserbereiters ausgebildet ist.

12. Vorrichtung gemäß einem der vorhergehenden Ansprüche, **dadurch gekennzeichnet, dass** der Aufbewahrungsbehälter einen Fühler zum Erfassen der Prozessgaskonzentrationen aufweist.

## Revendications

1. Appareil pour purifier du fumier ayant un récipient de stockage isolé (1) pour stocker une certaine quantité de fumier, ledit récipient de stockage contenant des moyens (11) pour distribuer un gaz contenant de l'oxygène, une ouverture d'entrée (2) pour acheminer la quantité de fumier, une première ouverture de sortie (3) pour décharger les gaz de traitement vers un élément de combustion (4) qui est placé à l'extérieur du récipient de stockage et qui est raccordé à au moins un panneau thermique (9) aménagé dans le récipient de stockage, et une seconde ouverture de sortie (5) prévue pour décharger la quantité purifiée de fumier.

2. Appareil selon la revendication 1, **caractérisé en ce que** le récipient de stockage a une forme rectangulaire et un panneau thermique est placé dans chacun des coins du récipient de stockage.

3. Appareil selon la revendication 2, **caractérisé en ce que** les panneaux thermiques sont placés selon un angle de 45° par rapport à la surface inférieure du récipient de stockage.

4. Appareil selon l'une quelconque des revendications précédentes, **caractérisé en ce qu'**un panneau thermique est placé au centre de la surface inférieure du récipient de stockage, perpendiculairement à ladite surface.

5. Appareil selon l'une quelconque des revendications précédentes, **caractérisé en ce que** les panneaux thermiques sont placés à distance des surfaces latérales, de la surface inférieure et de la surface supérieure du récipient de stockage.

6. Appareil selon l'une quelconque des revendications précédentes, **caractérisé en ce qu'**une extrudeuse est incorporée à son ouverture d'entrée pour broyer le fumier.

7. Appareil selon l'une quelconque des revendications précédentes, **caractérisé en ce que** les moyens utilisés pour distribuer le gaz contenant de l'oxygène sont formés par des conduites aménagées sur la surface inférieure du récipient de stockage.

8. Appareil selon la revendication 7, **caractérisé en ce que** les conduites sont raccordées à un compresseur.

9. Appareil selon l'une quelconque des revendications précédentes, **caractérisé en ce que** des moyens sont prévus pour mettre en circulation le contenu du récipient de stockage.

10. Appareil selon la revendication 9, **caractérisé en ce que** les moyens de mise en circulation sont formés par une pompe à double effet.

11. Appareil selon l'une quelconque des revendications précédentes, **caractérisé en ce que** l'élément de combustion est formé par un chauffe-bains.

12. Appareil selon l'une quelconque des revendications précédentes, **caractérisé en ce que** le récipient de stockage comprend un capteur pour détecter les concentrations des gaz de traitement.
